# EUROPÄISCHE PATENTSCHRIFT

(11) **EP 3 144 167 B1**
(45) Veröffentlichungstag und Bekanntmachung des Hinweises auf die Patenterteilung: **13.03.2019**
(21) Anmeldenummer: 16186054.9
(22) Anmeldetag: 26.08.2016
(51) Int. Cl.: B60J 1/00, B60J 1/12

(54) **RAHMENADAPTER, FENSTEREINSATZ MIT EINEM RAHMENADAPTER UND FAHRZEUG MIT EINEM RAHMENADAPTER**
FRAME ADAPTER, WINDOW INSERT WITH A FRAME ADAPTER AND VEHICLE WITH A FRAME ADAPTER
ADAPTATEUR DE CADRE, INSERT DE FENÊTRE COMPRENANT UN ADAPTATEUR DE CADRE ET VÉHICULE COMPRENANT UN ADAPTATEUR DE CADRE

(30) Priorität: 28.08.2015 DE 102015114424
(43) Veröffentlichungstag der Anmeldung: 22.03.2017
(73) Patentinhaber: REIMO Reisemobil-Center GmbH, 63329 Egelsbach (DE)
(72) Erfinder: Holona, Günter, 63326 Egelsbach (DE); Hoffmann, Ralf, 64293 Darmstadt (DE)
(74) Vertreter: Katscher Habermann Patentanwälte

(56) Entgegenhaltungen:
- DE-A1-102005 037 926
- DE-A1-102011 113 930
- DE-A1-102014 114 500
- FR-A1- 2 996 170

## Beschreibung

Die Erfindung betrifft einen Fenstereinsatz für einen beweglichen Fensterflügel, mit einem Rahmenadapter, der einen Adapterrahmen aufweist, der eine Fensteröffnung umrahmt, die durch einen ebenen Öffnungsrand begrenzt ist, und wobei der Adapterrahmen längs eines äußeren Rahmenumfangs einen Befestigungsrand aufweist.

In einem Fahrzeug sind üblicherweise mehrere Fenster angeordnet, die einer in dem Fahrzeug befindlichen Person einen Ausblick auf die Umgebung des Fahrzeugs ermöglichen. Eine Karosserie des Fahrzeugs weist zu diesem Zweck eine oder mehrere Karosserieöffnungen auf, in die entweder feststehende Fensterscheiben oder Fensterfüllungen eingesetzt sind oder die durch einen oder mehrere bewegliche Fensterflügel freigegeben oder verschlossen werden können. Bei einem Personenkraftwagen oder Kastenwagen sind die Frontscheibe und die Heckscheibe oftmals unbeweglich in der zugeordneten Fensteröffnung der Karosserie befestigt, während die Seitenscheiben verlagerbar bzw. versenkbar an der Karosserie gelagert sind, um je nach Wunsch die zugeordnete Karosserieöffnung zu verschließen oder freizugeben.

Viele Wohnmobile weisen eine Fahrzeugkarosserie und Motorisierung eines handelsüblichen Kleintransporters mit einer für einen längeren Aufenthalt und zum Schlafen von Personen angepassten und nachträglich eingebauten Inneneinrichtung auf. Die Wohnmobile weisen zudem oftmals ein ausstellbares Fahrzeugdach oder ein gegenüber dem handelsüblichen Kleintransporter angehobenes Fahrzeugdach auf, um es Personen zu ermöglichen, aufrecht in dem Wohnmobil zu stehen und sich zu bewegen.

Bei kostengünstigen Wohnmobilen wird die Fahrzeugkarosserie nur geringfügig verändert. In dem Innenraum sind veränderbare Möbelteile angeordnet, die je nach Bedarf als gemütliche Sitzplätze oder als Betten genutzt werden können. In DE 10 2014 114 500 A1 wird ein Ersatzpaneel beschrieben, mit welchem an Stelle einer Schiebetür in einem Kleintransporter eine Türeinheit mit einem feststehenden Türrahmen eingesetzt werden kann, um einen Kleintransporter mit möglichst geringem Aufwand in ein Wohnmobil umwandeln zu können.

In DE 10 2005 037 926 A1 wird eine Fensteranordnung für ein Wohnmobil beschrieben, bei der eine Hartglasscheibe vor einem beweglichen Fensterflügel angeordnet wird, dessen Fensterscheibe aus Kunststoff bestehen kann, sodass die Hartglasscheibe die Fensterscheibe aus Kunststoff schützt. Der Fensterflügel und die Hartglasscheibe weisen jeweils einen Fensterrahmen auf, die miteinander Verbunden und kombiniert werden können. Die beiden Fensterrahmen weisen jeweils eine ebenflächigen Umfangsrand auf und können nur in eine ebenflächige Aussparung in einem Wandelement des Wohnmobils eingesetzt werden.

Um während einer Übernachtung in einem Wohnmobil eine ausreichende Belüftung des Innenraums zu ermöglichen ist es üblicherweise erforderlich, mindestens eine oder vorzugsweise mehrere Seitenscheiben teilweise oder vollständig zu öffnen. Allerdings sind bei den meisten Kleintransportern die hinteren Seitenscheiben und die Heckscheibe unbeweglich in der betreffenden Karosserieöffnung festgelegt und lassen sich deshalb nicht öffnen, was insbesondere in einer warmen Umgebung, in der Wohnmobile oftmals benutzt werden, als nachteilig empfunden wird. Ein Umbau der feststehenden Seitenscheiben und insbesondere der Heckscheibe zu ausstellbaren oder versenkbaren Fensterscheiben ist jedoch aufwendig und teuer, weil diese Scheiben ebenso wie die zugeordneten Karosserieöffnungen regelmäßig eine Krümmung, bzw. einen gekrümmt verlaufenden Öffnungsrand aufweisen.

Es wird deshalb als eine Aufgabe der vorliegenden Erfindung angesehen, bei einem Fahrzeug in einem Bereich einer gekrümmten Karosserieöffnung beispielsweise an Stelle einer feststehenden Fensterscheibe eine bewegliche Fensterscheibe einzubauen.

Diese Aufgabe wird erfindungsgemäß durch einen Fenstereinsatz der eingangs genannten Gattung gelöst, der mindestens abschnittsweise einen in Umfangsrichtung gekrümmten Verlauf aufweist, wobei der Fensterflügel eine von einem Fensterrahmen umrahmte Fensterscheibe aufweist. Der Fenstereinsatz eignet sich besonders vorteilhaft für einen nachträglichen Einbau in ein Fahrzeug, dessen feststehende, aber üblicherweise auch längs ihres Umfangsrands gekrümmt verlaufende Fensterscheibe aus einer Karosserieöffnung herausgenommen wird, um an Stelle der feststehenden und mindestens in einer Richtung gekrümmten Fensterscheibe den Fenstereinsatz einzusetzen, in dem eine ebene bzw. planare Fensterscheibe beweglich gelagert werden kann. Der gekrümmte Befestigungsrand des Adapterrahmens kann in einfacher Weise an die Abmessungen und den üblicherweise gekrümmten Verlauf eines Öffnungsrands einer Karosserieöffnung für ein feststehendes Fensterelement angepasst sein. Der Adapterrahmen kann beispielsweise aus Blech oder aus einem Faserverbundwerkstoff hergestellt und kostengünstig an nahezu beliebige Formgebungen des Öffnungsrands einer Karosserieöffnung angepasst sein.

Durch den Fensterrahmen kann eine Versteifung des Fensterflügels erfolgen und eine zuverlässige Abdichtung der Fensteröffnung in dem Adapterrahmen durch den Fensterrahmen des Fensterflügels begünstigt werden.

Der Adapterrahmen kann weiterhin Versteifungselemente wie beispielsweise zusätzliche Streben oder Sicken aufweisen, um insbesondere bei großflächigen Karosserieöffnungen wie beispielsweise bei einer Heckscheibe eine zusätzliche Versteifung der Karosserie in diesem Bereich zu ermöglichen.

In den ebenen Öffnungsrand kann kostengünstig eine ebenfalls ebene Fensterscheibe eingesetzt werden. Es ist weiterhin möglich, eine in einem inneren Bereich gewölbte Fensterscheibe mit einem ebenen Fensterrand in den Rahmenadapter einzusetzen. Ebene Fensterscheiben oder Fensterscheiben mit einem gewölbten Fensterbereich und mit einem ebenen Fensterrand sind handelsüblich kostengünstig erhältlich und können in konstruktiv einfacher Weise beweglich an einem ebenen Öffnungsrand befestigt werden.

Zudem können bewegliche Fensterflügel im geschlossenen Zustand an einem ebenen Öffnungsrand zuverlässig und kostengünstig abgedichtet werden.

Die Fensterscheibe kann mit einer geeigneten Scharniereinrichtung verschwenkbar als Ausstellfenster ausgebildet sein. Es ist ebenfalls möglich, die Fensterscheibe in einer parallel zu einem ebenen Öffnungsrandabschnitt in gegenüberliegenden Führungsschienen verschiebbar zu lagern.

Einer besonders kostengünstigen Ausgestaltung des Erfindungsgedankens zu Folge ist vorgesehen, dass der Adapterrahmen einen rechteckigen Öffnungsrand aufweist. In die von dem rechteckigen Öffnungsrand begrenzte Fensteröffnung kann eine handelsübliche rechteckige Fensterscheibe eingesetzt werden. Es können jedoch auch anders geformte Fensteröffnungen wie beispielsweise bullaugenähnliche kreisrunde Fensteröffnungen, quadratische oder trapezförmige Fensteröffnungen mit gegebenenfalls abgerundeten Ecken vorgesehen sein.

Um eine zuverlässige Abdichtung des Rahmenadapters des Fenstereinsatzes zu ermöglichen ist vorgesehen, dass der Adapterrahmen einen Öffnungsrand mit einer umlaufenden Dichtungseinrichtung aufweist. Die Dichtungseinrichtung kann beispielsweise einen elastischen Dichtungsstreifen, eine flexible oder elastische Dichtlippe oder eine Hohlkammerdichtung aufweisen, die längs des Öffnungsrands umlaufend an dem Öffnungsrand festgelegt ist. Die Dichtungseinrichtung kann eine ebene und zuverlässig abdichtbare Anlagefläche für eine bewegliche Fensterscheibe oder für einen beweglichen Fensterrahmen bilden.

Um eine einfache und kostengünstige Befestigung des Fenstereinsatz in einer Karosserieöffnung zu erleichtern ist vorgesehen, dass der Befestigungsrand des Adapterrahmens mindestens abschnittsweise einen Befestigungsrandstreifen aufweist. Der Befestigungsrandstreifen bildet einen zumindest bereichsweise ebenen Flächenbereich, der zweckmäßigerweise hinsichtlich der Abmessungen und der Formgebung an eine zugeordnete Karosserieöffnung eines Fahrzeugs angepasst ist, um eng an einem bereits vorhandenen und für die Festlegung des nicht mehr benötigten feststehenden Fensters vorgesehenen Öffnungsrand der zugeordneten Karosserieöffnung anliegend eine zuverlässige Befestigung des Adapterrahmens an der Karosserieöffnung zu erleichtern. Der Befestigungsrandstreifen ermöglicht eine flächige klebende Befestigung des Adapterrahmens an dem Öffnungsrand der Karosserieöffnung. Es ist ebenfalls möglich, den Befestigungsrandstreifen durch geeignete Befestigungsmittel wie beispielsweise Nieten oder Schrauben mit dem Öffnungsrand der Karosserieöffnung zu verbinden, wobei durch den Befestigungsrandstreifen eine dichte und flächenbündige Befestigung des Adapterrahmens in der Karosserieöffnung erleichtert wird.

In Abhängigkeit von der Formgebung der Karosserieöffnung in der Fahrzeugkarosserie ist vorgesehen, dass der Befestigungsrand des Adapterrahmens näherungsweise viereckig ausgebildet ist und zwei gegenüberliegend angeordnete Befestigungsrandabschnitte jeweils eine konvexe Krümmung in Umfangsrichtung aufweisen. Ein derartiger Adapterrahmen eignet sich als Einsatz in eine Karosserieöffnung einer Heckscheibe, die ausschließlich in horizontaler Richtung eine Krümmung aufweist und in vertikaler Richtung im Wesentlichen eben verläuft. Es ist ebenfalls möglich, dass jeweils zwei gegenüberliegend angeordnete Befestigungsrandabschnitte jeweils eine konvexe Krümmung in Umfangsrichtung aufweisen. Viele Heckscheiben oder Seitenscheiben aktuell angebotener Kleintransporter weisen sowohl in horizontaler Richtung als auch in vertikaler Richtung eine gewisse Krümmung auf. Für derartige Karosserieöffnungen eignet sich in besonders vorteilhafter Weise ein daran angepasster Adapterrahmen, der einen ebenfalls in horizontaler als auch in vertikaler Richtung gekrümmt verlaufenden Befestigungsrand aufweist.

Der Fenstereinsatz kann als vormontiertes Bauteil hergestellt und angeboten werden, um eine einfache und kostengünstige Nachrüstung eines Fahrzeugs, insbesondere eines Kleintransporters oder eines Kombifahrzeugs, gegebenenfalls auch eines Bootes oder eines anderen Fahrzeugs zu ermöglichen, bei dem ein feststehendes Fenster durch ein bewegliches Fenster ausgetauscht werden soll. Der äußere Befestigungsrand des Adapterrahmens des erfindungsgemäßen Fenstereinsatzes ist hinsichtlich der Abmessungen und des Verlaufs in Umfangsrichtung an einen Verlauf einer vorgegebenen Karosserieöffnung des Fahrzeugs angepasst. Der innere Öffnungsrand der Fensteröffnung ist eben ausgebildet, um eine planare Fensterscheibe oder einen ebenen Fensterflügel mit einem umlaufenden Fensterrahmen aufnehmen zu können.

Der innere Öffnungsrand kann relativ zu angrenzenden Bereichen des Adapterrahmens zurückgesetzt bzw. in einer Vertiefung verlaufend ausgebildet sein, so dass eine auf dem Öffnungsrand anliegende Fensterscheibe oder ein Fensterrahmen flächenbündig mit den angrenzenden Bereichen einer Außenseite des Adapterrahmens abschließt. Die für ein Aufstellen oder Verschenken des beweglichen Fensters notwendigen Scharniere oder Beschläge können in dem Adapterrahmen integriert oder auf einer nach einem bestimmungsgemäßen Einbau in ein Fahrzeug dem Fahrzeuginnenraum zugewandten Innenseite des Adapterrahmens angeordnet sein. Auf diese Weise ist eine auf der Außenseite des Adapterrahmens nahezu fugen- und stufenlose Anordnung des beweglichen Fensters in dem Adapterrahmen möglich.

Einer Ausgestaltung des Erfindungsgedankens zufolge ist vorgesehen, dass der Fensterflügel mit einer Scharniereinrichtung verschwenkbar an dem Adapterrahmen gelagert ist. Die Scharniereinrichtung kann beispielsweise ein Klavierbandscharnier oder mehrere beabstandet zueinander angeordnete Schwenkscharniere aufweisen. Es ist ebenfalls möglich, dass die Scharniereinrichtung an zwei gegenüberliegenden Seitenrändern der Fensteröffnung des Adapterrahmens jeweils ein Beschlagselement angeordnet ist, um einen Fensterflügel drehbar oder dreh- und kippbar an dem Adapterrahmen zu lagern. Durch die Verwendung geeigneter Scharnier- oder Beschlagselemente können nahezu beliebige Bewegungsrichtungen und Verlagerungsbewegungen des an dem Adapterrahmen gelagerten beweglichen Fensterflügels ermöglicht werden.

Die Erfindung betrifft ebenfalls ein Fahrzeug mit einer Fahrzeugkarosserie mit einer Karosserieöffnung, in der ein Rahmenadapter mit den vorangehend beschriebenen Merkmalen angeordnet ist. Bei einem derartigen Fahrzeug kann in einer Fahrzeugkarosserie mit einer komplexen gekrümmten Formgebung in einfacher und kostengünstiger Weise ein beweglicher Fensterflügel eingesetzt werden.

Nachfolgend werden exemplarisch mehrere Ausführungsbeispiele des Erfindungsgedankens näher beschrieben, die in der Zeichnung abgebildet sind. Es zeigt:
Fig. 1 eine Frontansicht eines Fenstereinsatzes mit einem Rahmenadapter und mit einem beweglichen Fensterflügel,
Fig. 2 eine Schnittansicht des Fenstereinsatzes längs der Linie II-II in Fig. 1,
Fig. 3 eine Schnittansicht des Fenstereinsatzes längs der Linie III-III in Fig. 1, und
Fig. 4 eine schematische Darstellung eines Adapterrahmens.

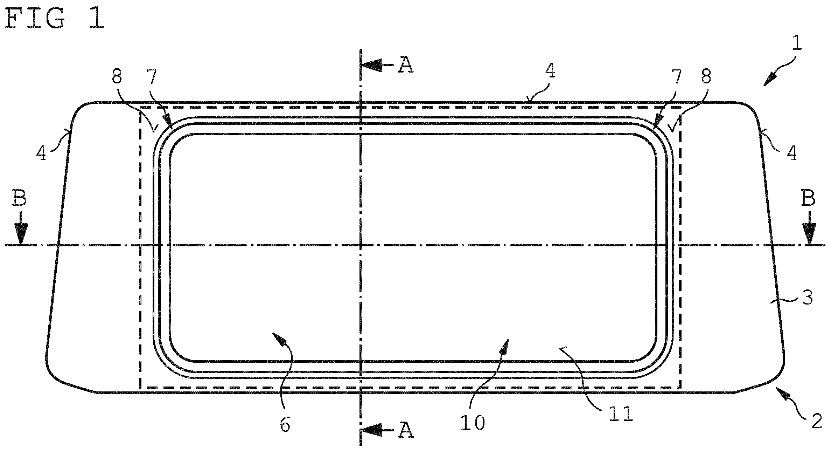

In den Fig. 1 bis 3 ist exemplarisch ein Fenstereinsatz 1 abgebildet, der an Stelle einer feststehenden Heckscheibe in die zugeordnete Karosserieöffnung eines Kleintransporters eingesetzt werden kann. Der Fenstereinsatz 1 weist einen Rahmenadapter 2 mit einem Adapterrahmen 3 auf, der aus Blech oder aus einem faserverstärkten Kunststoffmaterial wie beispielsweise Glasfaserverstärktem Kunststoff (GFK) hergestellt sein kann. Der Adapterrahmen 3 ist hinsichtlich seiner äußeren Abmessungen und insbesondere hinsichtlich des Verlaufs eines entlang einer äußeren Umfangslinie verlaufenden Befestigungsrands 4 an die Formgebung der zugeordneten Karosserieöffnung für die feststehende Heckscheibe des Kleintransporters angepasst.

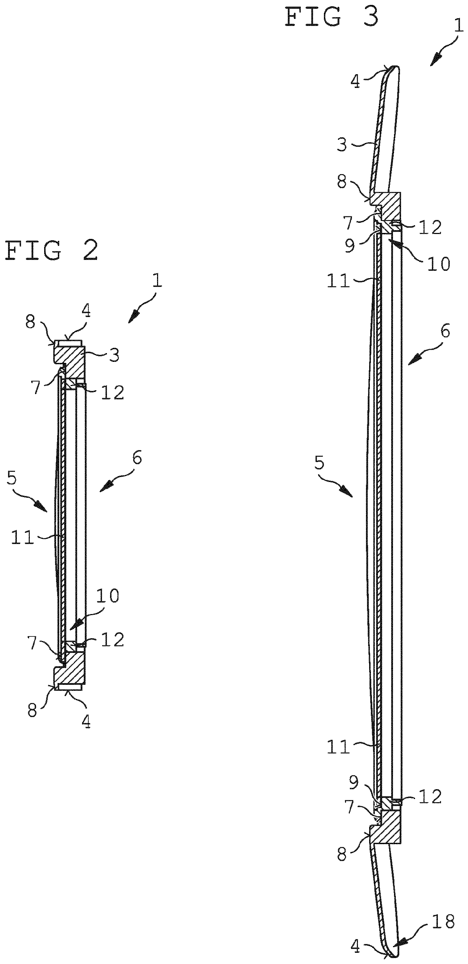

Der Verlauf des Befestigungsrands 4 des Adapterrahmens 3 entspricht dabei im Wesentlichen dem Verlauf des Umfangsrands der feststehenden Heckscheibe, die durch den Fenstereinsatz 1 ersetzt werden soll. Während die Heckscheibe und damit auch der Adapterrahmen 3 des Fenstereinsatzes 1 in vertikaler Richtung lediglich eine geringe konvexe Krümmung aufweist, die in Fig. 2 kaum erkennbar ist, weist die Heckscheibe und dementsprechend der Adapterrahmen 3 in horizontaler Richtung eine deutlich wahrnehmbare Krümmung auf, die bei der in Fig. 3 gezeigten Schnittansicht in einem von den Seitenrändern beabstandeten mittleren Bereich 5 deutlich wahrnehmbar ist.

Der Adapterrahmen 3 weist eine rechteckige und mit abgerundeten Ecken versehene Fensteröffnung 6 auf, die von einem in einer Ebene verlaufenden Öffnungsrand 7 umgeben und begrenzt ist. Die Fensteröffnung 6 weist in dem exemplarisch dargestellten Ausführungsbeispiel eine Breite von fast 1 m und eine Höhe von fast 0,5 m auf. Der Öffnungsrand 7 bildet eine umlaufende und gegenüber einer angrenzenden Außenfläche 8 des Adapterrahmens 3 stufenförmig zurückgesetzte Anlagefläche 9 für einen beweglich in der Fensteröffnung 6 gelagerten Fensterflügel 10. Der Fensterflügel 10 weist eine völlig ebene Fensterscheibe 11 auf, die von einem Fensterrahmen 12 umrahmt und eingefasst ist. Die für die bewegliche Lagerung des Fensterflügels 10 in der Fensteröffnung 6 des Adapterrahmens 3 erforderlichen Beschläge und Scharniere sind ebenso wie gesonderte Dichtungen in den Fig. 1 bis 3 nicht dargestellt.

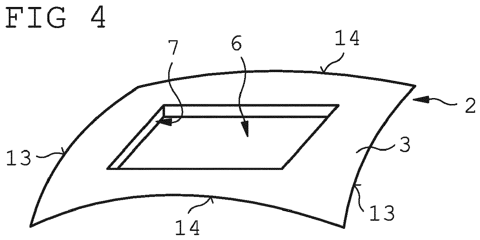

In Fig. 4 ist schematisch ein vorteilhafter Aspekt des erfindungsgemäßen Rahmenadapters 2 dargestellt. Der Adapterrahmen 3 bildet in einem innenliegenden Bereich eine Fensteröffnung 6 mit einem völlig planaren Öffnungsrand 7. Eine ebene Fensterscheibe 11 oder ein ebener Fensterflügel 10 können mit handelsüblichen Scharnieren oder Beschlägen ohne großen konstruktiven Aufwand beweglich an dem Öffnungsrand 7 gelagert werden und im geschlossenen Zustand die Fensteröffnung 6 dicht verschließen. Der äußere Befestigungsrand 4 des Adapterrahmens 3 ist an eine von außen betrachtet näherungsweise rechteckige Karosserieöffnung angepasst und weist vier Begrenzungsrandabschnitte 13 und 14 auf, wobei zwei einander gegenüberliegende kürzere Begrenzungsrandabschnitte 13 den vertikalen Rändern und zwei einander gegenüberliegende längere Begrenzungsrandabschnitte 14 den horizontalen Rändern der Karosserieöffnung der Heckscheibe zugeordnet sind. Sowohl die Begrenzungsrandabschnitte 13 als auch insbesondere die bei einem bestimmungsgemäßen Einbau horizontal verlaufenden Begrenzungsrandabschnitte 14 weisen jeweils eine konvexe Krümmung, bzw. einen konvex gekrümmten Verlauf in Umfangsrichtung auf, der in Fig. 4 zur Veranschaulichung deutlich übersteigert dargestellt ist. Auf diese Weise kann ein ebener Fensterflügel 10 kostengünstig in eine Karosserieöffnung mit einem komplex verlaufenden und geformten Umfangsrand eingesetzt werden.

Der Befestigungsrand 4 des Adapterrahmens 3 weist bei dem gezeigten Ausführungsbeispiel einen Befestigungsrandstreifen 18 auf, der an einem Öffnungsrand der Karosserieöffnung anliegen kann und eine klebende Verbindung des Rahmenadapters 2 mit der Karosserie des Fahrzeugs erleichtert.

Es ist grundsätzlich möglich, in einen ursprünglich geschlossenen Karosseriebereich eines Fahrzeugs ein bewegliches Fenster einzubauen. Zu diesem Zweck muss lediglich in den hierfür vorgesehenen Bereich der Blechverkleidung der Fahrzeugkarosserie eine Aussparung herausgetrennt werden. In die nachträglich erzeugte Karosserieöffnung kann dann ein an diese Aussparung angepasster erfindungsgemäßer Rahmenadapter 2 bzw. einen Fenstereinsatz 1 eingesetzt werden. Auf diese Weise können auch in einem handelsüblichen Kleintransporter, dessen Karosserie eine großflächige Blechverkleidung ohne Fenster aufweist und der deshalb kostengünstig erhältlich ist, nachträglich in nahezu beliebigen Bereichen der Karosserie bewegliche Fenster eingebaut werden.

## Patentansprüche

1. Fenstereinsatz (1) für ein Fahrzeug mit einem in eine Karosserieöffnung einsetzbaren Rahmenadapter (2) und mit einem in der Fensteröffnung (6) des Rahmenadapters (2) angeordneten beweglichen Fensterflügel (10), wobei der Rahmenadapter (2) einen Adapterrahmen (3) aufweist, der eine Fensteröffnung (6) umrahmt, die durch einen ebenen Öffnungsrand (7) begrenzt ist, **dadurch gekennzeichnet, dass** der Adapterrahmen (3) längs eines äußeren Rahmenumfangs einen Befestigungsrand (4) aufweist, der mindestens abschnittsweise einen in Umfangsrichtung gekrümmten Verlauf aufweist, und dass der Fensterflügel (10) eine von einem Fensterrahmen (12) umrahmte Fensterscheibe (11) aufweist.

2. Fenstereinsatz (1) nach Anspruch 1, **dadurch gekennzeichnet, dass** der Adapterrahmen (3) einen rechteckigen Öffnungsrand (7) aufweist.

3. Fenstereinsatz (1) nach Anspruch 1 oder Anspruch 2, **dadurch gekennzeichnet, dass** der Adapterrahmen (3) einen Öffnungsrand (7) mit einer umlaufenden Dichtungseinrichtung aufweist.

4. Fenstereinsatz (1) nach einem der vorangehenden Ansprüche, **dadurch gekennzeichnet, dass** der Befestigungsrand (4) mindestens abschnittsweise einen Befestigungsrandstreifen (18) aufweist.

5. Fenstereinsatz (1) nach einem der vorangehenden Ansprüche, **dadurch gekennzeichnet, dass** der Befestigungsrand (4) näherungsweise viereckig ausgebildet ist und zwei gegenüberliegend angeordnete Befestigungsrandabschnitte (14) jeweils eine konvexe Krümmung in Umfangsrichtung aufweisen.

6. Fenstereinsatz (1) nach Anspruch 5, **dadurch gekennzeichnet, dass** jeweils zwei gegenüberliegend angeordnete Befestigungsrandabschnitte (13, 14) jeweils eine konvexe Krümmung in Umfangsrichtung aufweisen.

7. Fenstereinsatz (1) nach einem der vorangehenden Ansprüche, **dadurch gekennzeichnet, dass** der Fensterflügel (10) mit einer Scharniereinrichtung (15) verschwenkbar an dem Adapterrahmen (3) gelagert ist.

8. Fahrzeug mit einer Fahrzeugkarosserie mit einer Karosserieöffnung, in der ein Fenstereinsatz (1) nach einem der Ansprüche 1 bis 7 angeordnet ist.

## Claims

1. A window insert (1) for a vehicle having a frame adapter (2) which can be inserted into a body aperture and having a movable window sash (10) arranged in the window aperture (6) of the frame adapter, wherein the frame adapter (2) comprises an adapter frame (3) which frames a window aperture (6) which is delimited by a flat aperture edge (7), **characterized in that** the adapter frame (3) comprises a fastening edge (4) along an outer frame circumference, which fastening edge has, at least in sections, a curved course in the circumferential direction, and **in that** the window sash (10) comprises a window pane (11) framed by a window frame (12).

2. The window insert (1) according to claim 1, **characterized in that** the adapter frame (3) comprises a rectangular aperture edge (7).

3. The window insert (1) according to claim 1 or claim 2, **characterized in that** the adapter frame (3) comprises an aperture edge (7) having a circumferential sealing device.

4. The window insert (1) according to one of the preceding claims, **characterized in that** the fastening edge (4) comprises, at least in sections, a fastening edge strip (18).

5. The window insert (1) according to one of the preceding claims, **characterized in that** the fastening edge (4) is formed approximately quadrangular and that two oppositely arranged fastening edge sections (14) each have a convex curvature in the circumferential direction.

6. The window insert (1) according to claim 5, **characterized in that** in each case two oppositely arranged fastening edge sections (13, 14) each have a convex curvature in the circumferential direction.

7. The window insert (1) according to one of the preceding claims, **characterized in that** the window sash (10) is pivotally mounted on the adapter frame (3) with a hinge device (15).

8. A vehicle having a vehicle body having a body aperture in which is arranged a window insert (1) according to one of claims 1 to 7.

## Revendications

1. Insert de fenêtre (1) pour un véhicule avec un adaptateur de cadre (2) insérable dans une ouverture de carrosserie et avec un battant (10) mobile disposé dans l'ouverture de fenêtre (6) de l'adaptateur de cadre (2), l'adaptateur de cadre (2) présentant un cadre adaptateur (3) qui encadre une ouverture de fenêtre (6) qui est délimitée par un bord d'ouverture plat (7), **caractérisé en ce que** le cadre adaptateur (3) présente un bord de fixation (4) le long d'un circonférence extérieur du cadre (4) qui présente, au moins partiellement, un tracé courbé dans le sens circonférentiel, et **en ce que** le battant (10) présente une vitre (11) encadrée par un cadre de fenêtre (12).

2. Insert de fenêtre (1) selon la revendication 1, **caractérisé en ce que** le cadre adaptateur (3) présente un bord d'ouverture rectangulaire (7).

3. Insert de fenêtre (1) selon la revendication 1 ou la revendication 2, **caractérisé en ce que** le cadre adaptateur (3) présente un bord d'ouverture (7) avec un moyen d'étanchéité périphérique.

4. Insert de fenêtre (1) selon l'une quelconque des revendications précédentes, **caractérisé en ce que** le bord de fixation (4) présente, au moins partiellement, une bande de bordure de fixation (18).

5. Insert de fenêtre (1) selon l'une quelconque des revendications précédentes, **caractérisé en ce que** le bord de fixation (4) a une forme sensiblement quadrangulaire et **en ce que** deux sections périphériques de fixation (14) disposées à l'opposé présentent chacune une courbure convexe dans le sens circonférentiel.

6. Insert de fenêtre (1) selon la revendication 5, **caractérisé en ce que** respectivement deux sections périphériques de fixation (13, 14) disposées à l'opposé présentent chacune une courbure convexe dans le sens circonférentiel.

7. Insert de fenêtre (1) selon l'une quelconque des revendications précédentes, **caractérisé en ce que** le battant (10) est, de manière pivotable, monté sur le cadre adaptateur (3) avec un dispositif de charnière (15).

8. Véhicule avec une carrosserie de véhicule comprenant une ouverture de carrosserie au sein de laquelle est disposé un insert de fenêtre (1) selon l'une quelconque des revendications 1 à 7.
